# EUROPÄISCHE PATENTSCHRIFT

(11) **EP 2 100 368 B1**
(45) Veröffentlichungstag und Bekanntmachung des Hinweises auf die Patenterteilung: **07.09.2011**
(21) Anmeldenummer: 06828680.6
(22) Anmeldetag: 08.12.2006
(51) Int. Cl.: H02M 7/49, H02H 7/122

(54) **HALBLEITERSCHUTZELEMENTE ZUR BEHERRSCHUNG VON DC-SEITIGEN KURZSCHLÜSSEN BEI SPANNUNGSZWISCHENKREISUMRICHTERN**
SEMICONDUCTOR PROTECTIVE ELEMENTS FOR CONTROLLING SHORT-CIRCUITS AT THE DC END OF VOLTAGE SOURCE CONVERTERS
ÉLÉMENTS DE PROTECTION SEMI-CONDUCTEURS POUR MAÎTRISER DES COURTS-CIRCUITS CÔTÉ CC DANS DES CONVERTISSEURS INDIRECTS DE TENSION

(43) Veröffentlichungstag der Anmeldung: 16.09.2009
(73) Patentinhaber: Siemens Aktiengesellschaft, 80333 München (DE)
(72) Erfinder: DOMMASCHK, Mike, 01945 Guteborn (DE); DORN, Jörg, 96155 Buttenheim (DE); EULER, Ingo, 91056 Erlangen (DE); LANG, Jörg, 95346 Stadtsteinach (DE); TU, Quoc-Buu, 90574 Rosstal (DE); WÜRFLINGER, Klaus, 90419 Nürnberg (DE)
(86) Internationale Anmeldenummer: PCT/DE2006/002249
(87) Internationale Veröffentlichungsnummer: WO 2008/067786

(56) Entgegenhaltungen:
- DE-A1- 10 103 031
- DE-A1- 10 323 220
- DE-A1- 10 333 798
- JP-A- 7 312 878

## Beschreibung

Die Erfindung betrifft eine Vorrichtung zum Umrichten eines elektrischen Stromes mit wenigstens einem Phasenmodul, das einen Wechselspannungsanschluss und wenigstens einen Gleichspannungsanschluss aufweist, wobei zwischen jedem Gleichspannungsanschluss und jedem Wechselspannunasanschluss ein Phasenmodulzweig ausgebildet ist und wobei jeder Phasenmodulzweig über eine Reihenschaltung aus Submodulen verfügt, die jeweils wenigstens einen Leistungshalbleiter aufweisen.

Eine solche Vorrichtung ist aus der DE 101 03 031 A1 bereits bekannt. Dort ist sowohl ein klassischer Spannungszwischenkreisumrichter als auch ein Spannungszwischenkreisumrichter mit verteilten Energiespeichern beschrieben. Spannungszwischenkreisumrichter mit verteilten oder unterteilten Energiespeichern und der Fähigkeit, gestufte Spannungen zu schalten, werden auch als Multilevel-Stromrichter bezeichnet. Der beschriebene Spannungszwischenkreisumrichter ist zum Anschluss an ein mehrphasiges Wechselspannungsnetz vorgesehen, wobei der Stromrichter über einen Gleichspannungskreis mit einem zweiten Umrichter verbunden ist. Der zweite Umrichter ist wechselspannungsseitig an ein weiteres ein- oder mehrphasiges Wechselspannungsnetz oder an eine-anzutreibende Last angeschlossen. Für jede Phase des anzuschließenden Wechselspannungsnetzes verfügt der Umrichter über ein Phasenmodul, das einen Wechselspannungsanschluss zum Anschließen der Phase des Wechselspannungsnetzes und zwei Gleichspannungsanschlüsse aufweist. Zwischen jedem Gleichspannungsanschluss und dem Wechselspannungsanschluss erstrecken sich Phasenmodulzweige, die zur Erzielung hoher Spannungen aus einer Reihenschaltung von abschaltbaren Leistungshalbleitern bestehen. Bei den abschaltbaren Leistungshalbleitern handelt es sich beispielsweise um so genannte IGBTs, GTOs oder IGCTs. Dabei ist jedem abschaltbaren Leistungshalbleiter eine Freilaufdiode gegensinnig parallel geschaltet. Beim klassischen Spannungszwischenkreisumrichter ist im Gleichspannungszwischenkreis ein zentraler Kondensator als Energiespeicher vorgesehen.

Anstelle eines zentralen Energiespeichers ist es jedoch gemäß der DE 101 03 031 A1 auch möglich, Kapazitäten auf in Reihe geschaltete Submodule zu verteilen. Die besagten Submodule weisen dann jeweils einen Kondensator in Parallelschaltung zu Leistungshalbleitern auf. Die Leistungshalbleiter umfassen abschaltbare Leistungshalbleiter und Freilaufdioden, die den abschaltbaren Leistungshalbleitern antiparallel geschaltet sind. Jeder Phasenmodulzweig des Stromrichters besteht somit aus einer Reihenschaltung von Submodulen mit eigenen Energiespeichern.

Bei den bereits bekannten Spannungszwischenkreisumrichtern treten im Kurzschlussfall im Gleichspannungskreis hohe Fehlerströme im Umrichter auf, die im Wesentlichen durch eine Induktivität, also beispielsweise durch eine wechselspannungsseitig an den Phasenmodulen angeordnete Wicklung, begrenzt werden. Der beim Kurzschluss auftretende Fehlerstrom wird durch die Netzspannung getrieben und üblicherweise durch Öffnen eines Leistungsschalters, der die Wechselspannung vom Umrichter trennt, unterbrochen. Bestimmte Halbleiterbauformen können jedoch bis zur Öffnung des Leistungsschalters bereits irreversibel geschädigt oder zerstört werden. Um eine Zerstörung der Leistungshalbleiter und insbesondere der Freilaufdioden zu vermeiden, wurden die Dioden bislang überdimensioniert ausgelegt, um einem prognostizierten Kurzschlussstrom auch über eine längere Zeitdauer hinweg standhalten können. Eine solche Lösung hat jedoch zu keinen zufrieden stellenden Ergebnissen geführt und ist darüber hinaus kostenintensiv. Ferner werden abschaltbare Leistungshalbleiter und Freilaufdioden auf dem Markt üblicherweise gemeinsam, beispielsweise in einem gemeinsamen Gehäuse angeboten, so dass eine Überdimensionierung der Freilaufdioden eine separate und kostenintensive Herstellung der Leistungshalbleiter erforderlich macht.

Die DE 103 23 220 A1 beschreibt einen Spannungszwischenkreisumrichter, an dessen Eingang eine Wechselspannung anliegt. Der besagte Umrichter weist Phasenmodulzweige auf, die aus einer Reihenschaltung von Submodulen bestehen. Die Phasenmodulzweige sind über einen Mittelfrequenztransformator miteinander verbunden. Jedes Submodul verfügt über einen Energiespeicher, dem eine Schaltung aus Leistungshalbleiterschaltern parallel geschaltet ist. Der Energiespeicher und die Leistungshalbleiterschaltung bilden eine so genannte Vollbrückenschaltung aus. Um im Fehlerfall eines der Leistungshalbleiter ein Durchlegieren des Submoduls zu gewährleisten, wird vorgeschlagen, wenigstens ein elektronisches Halbleiterbauelement dem Energiespeicher parallel zu schalten.

Die DE 103 33 798 A1 beschreibt ein Verfahren zum Kurzschließen eines solchen Spannungszwischenkreisumrichters, wobei das Durchlegieren durch zweckmäßige Ansteuerungen der Leistungshalbleiterschalter der Submodule erfolgt.

Aufgabe der Erfindung ist es daher, eine Vorrichtung der eingangs genannten Art bereitzustellen, die auch hohen Kurzschlussströmen über eine ausreichende Zeitdauer hinweg standhalten kann.

Die Erfindung löst diese Aufgabe durch Halbleiterschutzmittel in Parallel- und/oder Reihenschaltung zu wenigstens einem der Leistungshalbleiter, wobei jedes Submodul einen abschaltbaren Leistungshalbleiter aufweist, dem eine gegensinnige Freilaufdiode parallel geschaltet ist, wobei die Halbleiterschutzmittel ein Schutzelement umfassen, das der gegensinnigen Freilaufdiode parallel geschaltet ist.

Erfindungsgemäß sind ein oder mehrere Bauteile zum Schutz der Leistungshalbleiter vorgesehen. Diese Bauteile werden von dem Begriff Halbleiterschutzmittel umfasst. Ein solches Bauteil ist beispielsweise eine Einheit in Parallelschaltung zu einem der Leistungshalbleiter. Darüber hinaus umfassen die Halbleiterschutzmittel jedoch auch Strombegrenzungsmittel, die zum Begrenzen des Stromflusses durch die Phasenmodulzweige eingerichtet sind. Der Begriff Leistungshalbleiter umfasst hier sowohl die abschaltbaren Leistungshalbleiter, also IGBTs, GTOs, IGCTs oder dergleichen, als auch die üblicherweise parallel zu den abschaltbaren Leistungshalbleitern geschalteten Freilaufdioden.

Erfindungsgemäß weist jedes Submodul wenigstens einen abschaltbaren Leistungshalbleiter auf, dem eine gegensinnige Freilaufdiode parallel geschaltet ist, wobei die Halbleiterschutzmittel ein Schutzelement umfassen, das der gegensinnigen Freilaufdiode parallel geschaltet ist. Auf diese Weise wird die geschützte Freilaufdiode bei einem Kurzschluss im Gleichspannungskreis nicht mehr mit dem gesamten Kurzschlussstrom beaufschlagt.

Vorteilhafterweise ist das Schutzelement eine weitere Freilaufdiode, die eine an den zu erwartenden Kurzschlussstrom angepasste Stromtragfähigkeit aufweist. Gemäß dieser vorteilhaften Weiterentwicklung wird der eigentlichen Freilaufdiode eine zusätzliche Freilaufdiode parallel geschaltet. Der Stromfluss im Kurzschlussfall wird daher von beiden Freilaufdioden übernommen. Die statische Durchlasskennlinie der als Schutzelement dienenden Freilaufdiode ist im Verhältnis zu der bereits integrierten Freilaufdiode so eingerichtet, dass das Schutzelement im Fehlerfall einen wesentlichen Anteil des Fehlerstromes übernimmt und damit die integrierte Freilaufdiode entlastet. Ferner ist die Stoßstromfähigkeit der als Schutzelement wirkenden Freilaufdiode an die zu erwartenden Belastungen angepasst. Im Normalbetrieb teilt sich der über den jeweiligen Phasenmodulzweig fließende Strom auf die integrierte Freilaufdiode und auf die als Schutzelement wirkende Freilaufdiode auf, wobei die besagte Aufteilung von der statischen Durchlasskennlinie der beiden Freilaufdioden abhängig ist. Somit werden beim Kommutieren des Stromes im Normalbetrieb auch beide Freilaufdioden belastet, weshalb die als Schutzelement wirkende Freilaufdiode Anforderungen hinsichtlich des spezifizierten Abschaltverhaltens aufweist.

Bei dem hiervon abweichenden Ausführungsbeispiel der Erfindung ist das Schutzelement ein Thyristor. Dieser ist im Normalbetrieb ausgeschaltet, so dass ein Stromfluss über den Thyristor unmöglich ist. Durch einen Spannungs- oder Stromsensor im Gleichspannungskreis, am Wechselstromanschluss, oder durch Messen des Zweigstromes über den Phasenmodulzweig kann ein Kurzschluss detektiert werden. Die Art und Weise des Nachweises des Kurzschlusses ist im Rahmen der Erfindung jedoch beliebig. Bei einer Ausgestaltung der Erfindung ist einer oder sind mehrere der besagten Messsensoren mit einer Auswerteeinheit verbunden, die anhand einer in ihr implementierten Logik den Kurzschlussfall feststellt und anschließend ein Signal zum Zünden des oder der Thyristoren erzeugt. Hierzu vergleicht die Auswerteeinheit beispielsweise den gemessenen Strom mit einem Schwellenstrom und stellt bei längerem Überschreiten des Schwellenstromes den Kurzschlussfall fest. Anschließend werden innerhalb einer Zeitdauer in der Größenordnung von Mirkosekunden die abschaltbaren Leistungshalbleiter in ihre Sperrstellung überführt. Der Kurzschlussstrom kann dann nur noch über die parallel geschalteten Freilaufdioden fließen. Durch ein sich anschließendes Signal der Auswerteeinheit wird der Thyristor von seiner Sperrstellung in seine Durchgangsstellung überführt, in der ein Stromfluss über den Thyristor ermöglicht ist. Der Kurzschlussstrom fließt daher dann sowohl über den Thyristor als auch über die integrierte Freilaufdiode. Die statische Durchlasskennlinie des Thyristors ist so ausgestaltet, dass dieser einen wesentlichen Anteil des Fehlerkurzschlussstromes übernimmt, so dass die integrierte Freilaufdiode entlastet wird. Das periodische Schalten der abschaltbaren Leistungshalbleiter, die parallel zum als Schutzelement wirkenden Thyristor liegen, im Normalbetrieb darf nicht zu einem unerwünschten Zünden des Thyristors führen. Eine Selbstzündung des Thyristors würde beispielsweise durch eine zu hohe Spannungssteilheit ausgelöst werden. Der Thyristor muss daher über eine ausreichende so genannte du/dt-Fähigkeit verfügen.

Vorteilhafterweise umfassen die Halbleiterschutzmittel Induktivitäten, die in jedem Phasenmodul angeordnet sind. Die Anordnung der Induktivitäten innerhalb des Phasenmoduls ist grundsätzlich beliebig. So ist beispielsweise jedes Phasenmodul über die Induktivitäten mit einem oder jedem der Gleichspannungsanschlüsse verbunden. Dabei ist die Induktivität Teil des Phasenmoduls.

Vorteilhafterweise sind die Induktivitäten zwischen der Reihenschaltung der Submodule und dem Wechselspannungsanschluss angeordnet. Somit ist jeder Phasenmodulzweig mittels der Induktivitäten mit dem Wechselspannungsanschluss verbunden. Die Induktivitäten der Phasenmodulzweige des gleichen Phasenmoduls sind somit benachbart zueinander angeordnet, wobei der Wechselspannungsanschluss zwischen den Induktivitäten angeordnet ist. Die Induktivitäten können daher auch miteinander induktiv gekoppelt werden, wodurch die Gesamtinduktivität für Kreisströme zwischen den Phasenmodulen und dem Gleichstromanteil des Zweigstromes erhöht ist und die Einzelinduktivitäten unter Kostenersparnis kleiner ausgelegt werden, wenn die Kreisströme für die Dimensionierung maßgeblich sind können.

Bei einer weiteren Ausgestaltung der Erfindung umfassen die Halbleiterschutzmittel Induktivitäten, die in den Submodulen angeordnet sind. Dabei weist beispielsweise jedes Submodul eine Induktivität auf. Abweichend davon weist nur ein Submodul oder weisen nur einige Submodule eine Induktivität auf. Die Induktivitäten sind gemäß dieser Variante der Erfindung im Phasenmodul verteilt angeordnet.

Schließlich ist es im Rahmen der Erfindung möglich, dass die Halbleiterschutzmittel Induktivitäten umfassen, die im Gleichspannungskreis angeordnet sind. Hierbei sind die Induktivitäten in unmittelbarer physikalischer Nähe der Phasenmodule angeordnet, so dass ein Fehlerstrom, der durch einen Kurzschluss im Gleichspannungszwischenkreis ausgelöst wurde, gezwungen ist, über die Induktivitäten des Gleichspannungskreises zu fließen.

Zweckmäßigerweise umfassen die Halbleiterschutzmittel Induktivitäten, die wechselstromseitig der Phasenmodule angeordnet sind. Bei einer weiteren Variante umfassen die Halbleiterschutzmittel Transformatorwicklungen. Die Transformatorwicklungen sind mit einer zur effektiven Strombegrenzung ausreichenden Streuinduktivität ausgerüstet.

Vorteilhafterweise weist jedes Submodul eine erste Anschlussklemme, eine zweite Anschlussklemme, einen Energiespeicher und einen zwei in Reihe geschaltete abschaltbare Leistungshalbleiter aufweisenden Leistungshalbleiterzweig in Parallelschaltung zum Energiespeicher auf, wobei jedem abschaltbaren Leistungshalbleiter eine gegensinnige Freilaufdiode parallel geschaltet ist und der Verbindungspunkt des Emitters eines ersten abschaltbaren Leistungshalbleiters des Leistungshalbleiterzweiges und der Anode, der dem ersten abschaltbaren Leistungshalbleiters zugeordneten gegensinnigen Freilaufdiode die erste Anschlussklemme und der Verbindungspunkt der abschaltbaren Leistungshalbleiter des Leistungshalbleiterzweiges und der Freilaufdiode die zweite Anschlussklemme ausbilden.

Abweichend davon weist jedes Submodul eine erste Anschlussklemme, eine zweite Anschlussklemme, einen Energiespeicher und einen zwei in Reihe geschaltete abschaltbare Leistungshalbleiter aufweisende Leistungshalbleiterzweig in Parallelschaltung zum Energiespeicher auf, wobei jedem abschaltbaren Leistungshalbleiter eine gegensinnige Freilaufdioden parallel geschaltet ist und Verbindung des Kollektores eines ersten abschaltbaren Leistungshalbleiters des Leistungshalbleiterzweiges und der Katode, der dem ersten abschaltbaren Leistungshalbleiter zugeordneten gegensinnigen Freilaufdiode die erste Anschlussklemme und der Verbindungspunkt der abschaltbaren Leistungshalbleiter des Leistungshalbleiterzweiges und der Freilaufdioden die zweite Anschlussklemme ausbilden.

Die Erfindung betrifft auch ein Verfahren zum Schutz von Leistungshalbleitern einer solchen Vorrichtung, bei dem ein Kurzschluss gleichspannungsseitig des Phasenmoduls durch Messsensoren erfasst wird, nach dem Erfassen der Kurzschlussstromes die abschaltbaren Leistungshalbleiter in ihre Trennstellung überführt werden und anschließend ein Thyristor als Halbleiterschutzelement in seine Durchlassstellung überführt wird.

Weitere zweckmäßige Ausgestaltungen und Vorteile der Erfindung sind Gegenstand der nachfolgenden Beschreibung von Ausführungsbeispielen unter Bezug auf die Figuren der Zeichnung, wobei gleiche Bezugszeichen auf gleich wirkende Bauteile verweisen, und wobei
- Figur 1: eine schematische Darstellung eines Ausfüh- rungsbeispiels der erfindungsgemäßen Vorrich- tung unter Verdeutlichung des Pfades eines Fehlerstromes im Kurschlussfall,
- Figur 2: ein Phasenmodul eines Ausführungsbeispiels der erfindungsgemäßen Vorrichtung mit so genannter Zweipunkt-Topologie,
- Figur 3: ein Phasenmodul eines Ausführungsbeispiels der erfindungsgemäßen Vorrichtung mit so genannter Multi-Level-Topologie und
- Figur 4: eine Ersatzbilddarstellung eines Submoduls des Phasenmoduls gemäß Figur 3 zeigen.

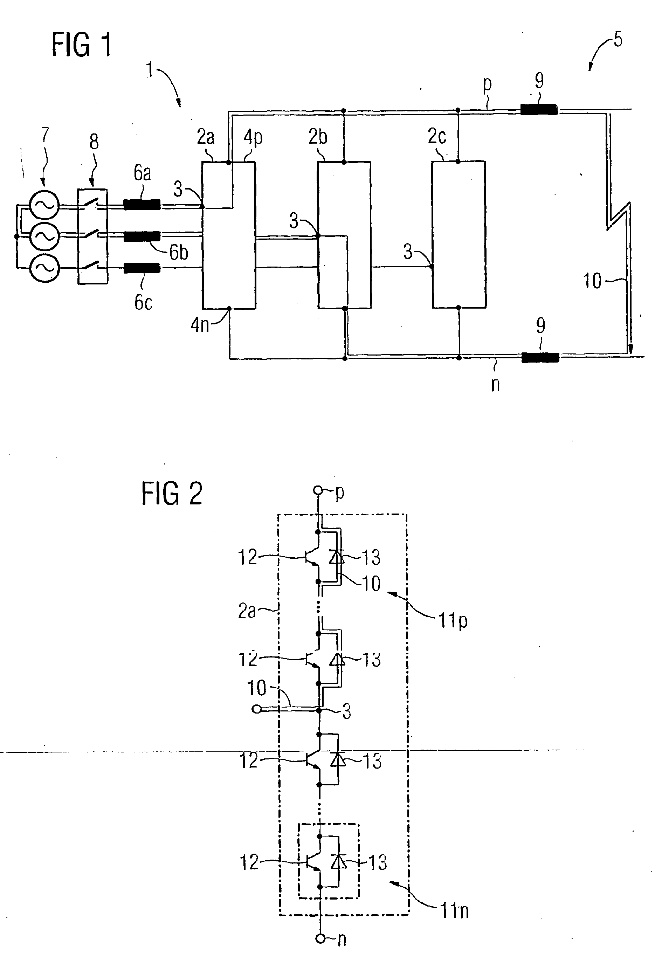

Figur 1 zeigt ein Ausführungsbeispiel der erfindungsgemäßen Vorrichtung 1 in schematischer Darstellung. Die gezeigte Vorrichtung weist drei Phasenmodule 2a, 2b und 2c auf, die jeweils mit einer Phase des Wechselspannungsnetzes 7 verbindbar sind. Dazu weist jedes Phasenmodul 2a, 2b und 2c einen Wechselspannungsanschluss 3 auf. Ferner verfügt jedes Phasenmodul 2a,2b,2c über einen positiven Gleichspannungsanschluss p sowie über einen negativen Gleichspannungsanschluss n, der mit dem positiven Pol eines Gleichspannungszwischenkreises 5 beziehungsweise mit dem negativen Pol des Gleichspannungszwischenkreises 5 verbunden ist.

Die Phasenmodule 2a,2b,2c umfassen jeweils zwei Phasenmodulzweige, die sich jeweils zwischen dem Wechselspannungsanschluss 3 und einem der Gleichspannungsanschlüsse p beziehungsweise n erstrecken. Insgesamt sind in dem dargestellten Ausführungsbeispiel sechs Phasenmodulzweige vorgesehen. Jeder Phasenmodulzweig weist eine Reihenschaltung aus Submodulen mit abschaltbaren Leistungshalbleitern auf.

Der Anschluss an das als ideale Spannungsquelle dargestellten Wechselspannungsnetzes 7 erfolgt beispielsweise über einen Transformator. Zwischen diesem Transformator und dem Wechselspannungsanschluss 3 können ferner Zusatzinduktivitäten angeordnet sein. Die Streuinduktivitäten des Transformators, die Zusatzinduktivitäten und die Impedanz des Wechselspannungsnetzes 7 sind in Figur 1 durch die Induktivitäten 6a,6b,6c verdeutlicht, die wechselspannungsseitig der Phasenmodule 2a, 2b und 2c angeordnet sind. Zwischen dem Wechselspannungsnetz 7 und den Induktivitäten 6a, 6b, 6c ist ein dreipoliger Leistungsschalter 8 geschaltet, der mit einem Schutzgerät verbunden ist, das mit Messsensoren zum Erfassen des wechselspannungsseitigen Stromflusses der Phasenmodule ausgerüstet ist. Übersteigt der erfasste Strom einen zuvor festgelegten Schwellenstrom, kommt es zum Schalten des Leistungsschalters 8, wobei jeder Pol des Leistungsschalters 8 in seine Trennstellung überführt wird, in der ein Stromfluss über den Leistungsschalter 8 unterbrochen ist.

Im Gleichspannungskreis 5 sind Induktivitäten 9 angeordnet und zwar sowohl im positiven Pol p des Gleichspannungskreises 5 als auch im negativen Pol n.

In Figur 1 ist ferner ein beispielhafter Pfad eines aus dem Wechselspannungsnetz 7 getriebenen Kurzschlussstromes 10 verdeutlicht, der bei einem Kurzschluss im Gleichspannungskreis 5 auftreten würde. Es ist erkennbar, dass der Kurzschlussstrom 10 aus dem Wechselspannungsnetz 7 heraus über den Leistungsschalter 8, die Induktivität 6a, die Leistungshalbleiter des Phasenmoduls 2a, die Induktivitäten 9 im positiven und negativen Pol n des Gleichspannungskreises 5, die Leistungshalbleiter des Phasenmoduls 2b, die Induktivität 6b, und schließlich wieder in das Wechselspannungsnetz 7 fließt. Die im Gleichspannungskreis 5 angeordneten Induktivitäten 9 begrenzen somit den Kurzschlussstrom 10 und dienen als Halbleiterschutzmittel im Rahmen der Erfindung.

Figur 2 zeigt ein Phasenmodul 2a in Zweipunkttechnik, wobei wieder der Pfad eines Kurzschlussstromes 10 über die empfindlichen Leistungshalbleiter verdeutlicht ist. Es sei darauf hingewiesen, dass alle abschaltbaren Leistungshalbleiter unmittelbar nach Erfassen des Kurzschusses durch zweckmäßige Messsensoren, die mit einer Auswerteeinheit verbunden sind, in ihre Trennstellung überführt wurden. In Figur 2 ist erkennbar, dass das Phasenmodul 2a aus zwei Phasenmodulzweigen 11p und 11n zusammengesetzt ist. Dabei erstreckt sich der Phasenmodulzweig 11p zwischen dem Wechselspannungsanschluss 3 und dem positiven Gleichspannungsanschluss p und der Phasenmodulzweig 11n zwischen dem Wechselspannungsanschluss 3 und dem negativen Gleichspannungsanschluss n. Jeder der Phasenmodulzweige 11p, 11n weist wieder eine Reihenschaltung aus Submodulen auf, wobei jedes Submodul über einen abschaltbaren Leistungshalbleiter 12 und eine antiparallel zum abschaltbaren Leistungshalbleiter geschaltete Freilaufdiode 13 verfügt. Die gepunktete Linie jedes Phasenmodulzweiges soll andeuten, dass die Anzahl der Submodule und damit der abschaltbaren Leistungshalbleiter 12 beziehungsweise der Freilaufdioden 13 für jeden Phasenmodulzweig 11p beziehungsweise 11n keineswegs auf zwei begrenzt ist, sondern beliebig in Abhängigkeit der anliegenden Spannung erweitert werden kann.

Im Zusammenhang mit der Figur 1 beschriebene Kurzschlussstrom würde somit über den Wechselspannungsanschluss 3 des Phasenmoduls 2a sowie über sämtliche Freilaufdioden 13 des Phasenmodulszweiges 11p zum positiven Pol des Gleichspannungskreises 5 fließen. Somit wären die Freilaufdioden 13 des Phasenmodulzweiges 11p beziehungsweise die Freilaufdioden des Phasenmodulzweiges 11n des Phasenmoduls 2b den hohen Kurzschlussströmen ausgesetzt und könnten vor dem Auslösen des Leistungsschalters 8 beschädigt werden.

Eine erfindungsgemäße Vorrichtung gemäß Figur 1, die ein Phasenmodul gemäß Figur 2 aufweist, umfasst ein figürlich nicht dargestelltes Halbleiterschutzmittel vorzugsweise in Form eines Thyristors oder einer Diode in Parallelschaltung zu einem Leistungshalbleiter, insbesondere einer Freilaufdiode, die bei abgeschalteten abschaltbaren Leistungshalbleitern mit dem Kurzschlussstrom belastet wird. Darüber hinaus umfasst die Vorrichtung einen ebenfalls nicht gezeigten zentralen Energiespeicher, beispielsweise in Gestalt eines Kondensators, der niederohmig mit dem Umrichter der Vorrichtung verbunden ist.

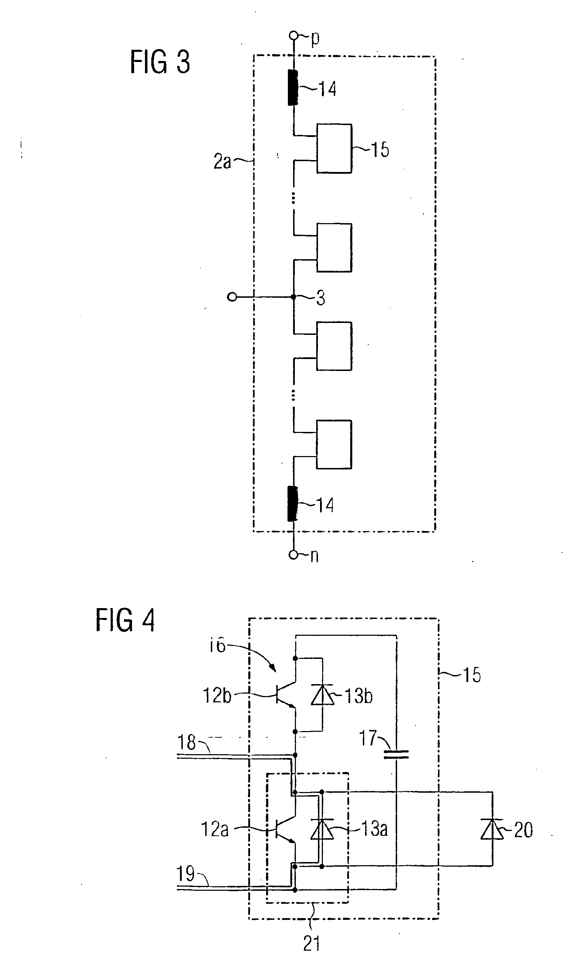

Figur 3 zeigt ein Phasenmodul 2a eines so genannten Multilevel-Umrichters, der ebenfalls ein Ausführungsbeispiel der erfindungsgemäßen Vorrichtung ist. Das Phasenmodul 2a umfasst in der Multileveltechnik eine Reihenschaltung aus Submodulen 15, die jeweils einen Energiespeicher aufweisen, so dass durch Zu- und Abschalten der Submodule in der Reihenschaltung abgestufte Spannungsverläufe erzeugbar sind. Auf Grund der dezentralen Anordnung der Energiespeicher im Phasenmodul ist es möglich das Phasenmodul 2a mit einer zusätzlichen Induktivität 14 auszurüsten, die zwischen den Gleichspannungsanschluss p beziehungsweise n und der jeweiligen Reihenschaltung aus bipolaren Submodulen 15 geschaltet sind. Die zusätzlichen Induktivität begrenzen den Kurzschlussstrom. Eine Anordnung der Induktivitäten in den Phasenmodulen ist jedoch nur bei der Multileveltechnik vorteilhaft. Bei Umrichtern mit zentralem Energiespeicher wirken sich die Induktivitäten im Phasenmodul jedoch negativ auf das Schaltverhalten aus. Figur 4 zeigt ein Ersatzschaltbild des Submoduls 15 gemäß Figur 3. Es ist erkennbar, dass jedes Submodul 15 zwei abschaltbare Leistungshalbleiter 12, wie beispielsweise IGBTs, aufweist. Wieder ist jedem abschaltbaren Leistungshalbleiter 12 eine Freilaufdiode 13 antiparallel geschaltet. Auf diese Weise ist eine Reihenschaltung 16 ausgebildet, die aus den abschaltbaren Leistungshalbleitern 12 besteht. Der Reihenschaltung 16 ist ein als Kondensator 17 ausgebildeter Energiespeicher parallel geschaltet.

Jedes Submodul 15 weist eine erste Anschlussklemme 18 sowie eine zweite Anschlussklemme 19 auf. Zwischen den Anschlussklemmen 18 beziehungsweise 19 ist ein erster Leistungshalbleiter 12a angeordnet. Der Leistungshalbleiter 12b ist in Figur 4 oberhalb des abschaltbaren Leistungshalbleiters 12a angeordnet. Nach Erfassen eines Kurzschlusses werden zunächst die abschaltbaren Leistungshalbleiter in ihre Trennstellung überführt. Der Kurzschlussstrom fließt daher über die untere Freilaufdiode 13a . Die Freilaufdiode 13b wird vom Kurzschlussstrom hingegen nicht beeinträchtigt. Aus diesem Grunde ist nur der unteren Freilaufdiode 12a ein Schutzelement 20 parallel geschaltet. Das Schutzelement 20 ist eine weitere Freilaufdiode, wobei diese eine Durchlasskennlinie aufweist, die im Verhältnis zur integrierten Diode 13a so ist, dass im Fehlerfall ein wesentlicher Anteil des Kurzschlussstromes über die Freilaufdiode 20 fließt. Die Freilaufdiode 20 weist ferner eine ausreichend hohe Stoßstromtragfähigkeit auf. Im Normalbetrieb fließt der Strom sowohl über die Freilaufdiode 13a als auch über die als Schutzelement wirkende Freilaufdiode 20. Die Aufteilung ist abhängig von den statischen Durchlasskennlinien der beiden Freilaufdioden 13a beziehungsweise 20. Beim Abkommutieren wird daher auch die Freilaufdiode 20 belastet, die daher eine entsprechende Eignung hinsichtlich des Abschaltverhaltens aufweisen muss. Solche Freilaufdioden sind dem Fachmann jedoch bekannt, so dass an dieser Stelle eine genauere Beschreibung der Diodeneigenschaften entfallen kann.

Auf dem Markt sind insbesondere abschaltbare Leistungshalbleiter 12a mit gegensinnigen Freilaufdioden 13a erhältlich, die in einem gemeinsamen Gehäuse angeordnet sind, das in Figur 4 mit 21 bezeichnet ist. Das Schutzelement, also in diesem Fall die Freilaufdiode 20, ist außerhalb des Gehäuses 20 angeordnet.

Selbstverständlich können im Rahmen der Erfindung zusätzlich zu dem Schutzelement 20 Induktivitäten 14 im Phasenmodul 2a,2b,2c oder Induktivitäten 9 im Gleichspannungskreis 5 vorliegen.

Darüber ist es im Rahmen der Erfindung auch möglich, dass die Submodule 15 zumindest teilweise eine Induktivität aufweisen.

Tritt bei dem Umrichter mit Multileveltopologie gemäß der Figuren 3 und 4 ein Kurzschluss im Gleichspannungszwischenkreis auf, steigt der Zweigstrom über das Phasenmodul 2a mit einer Geschwindigkeit an, die im Wesentlichen durch die Induktivität 14 bestimmt ist. Tritt der Kurzschluss gleichspannungsseitig der Induktivitäten 9 im Gleichspannungskreis auf, begrenzen auch diese die Stromanstiegsgeschwindigkeit. Die Induktivitäten 14 sind beispielsweise so ausgelegt, dass bei einem Kurzschluss die abschaltbaren Leistungshalbleiter noch innerhalb des zulässigen Normalstrombereichs der abschaltbaren Leistungshalbleiter abgeschaltet werden können. Aus diesem Grunde ist eine schnelle Erfassung und Reaktion bereitgestellt, die in der Größenordnung von wenigen Mikrosekunden liegt. Nach dem Abschalten der abschaltbaren Leistungshalbleiter, führen nur noch die Freilaufdioden den Kurzschlussstrom. Beim Einsatz von Thyristoren als Schutzelement, sollten diese nach wenigen Millisekunden gezündet werden.

## Patentansprüche

1. Vorrichtung (1) zum Umrichten eines elektrischen Stromes mit wenigstens einem Phasenmodul (2a,2b,2c), das einen Wechselspannungsanschluss (3) und wenigstens einen Gleichspannungsanschluss (p,n) aufweist, wobei zwischen jedem Gleichspannungsanschluss (p,n) und jedem Wechselspannungsanschluss (3) ein Phasenmodulzweig (11p, 11n) ausgebildet ist und wobei jeder Phasenmodulzweig (11p, 11n) über eine Reihenschaltung aus Submodulen (15) verfügt, die jeweils wenigstens einen Leistungshalbleiter (12,13) aufweisen, wobei jedes Submodul (15) einen abschaltbaren Leistungshalbleiter (12) aufweist, dem eine gegensinnige Freilaufdiode (13) parallel geschaltet ist,
**gekennzeichnet durch**
Halbleiterschutzmitte (9,14,20) in Parallel- und/oder Reihenschaltung zu wenigstens einem der Leistungshalbleiter (12,13),
wobei die Halbleiterschutzmittel (9,14,20) ein Schutzelement (20) umfassen, das der gegensinnigen Freilaufdiode (13) parallel geschaltet ist.

2. Vorrichtung (1) nach Anspruch 1,
**dadurch gekennzeichnet, dass**
das Schutzelement eine Freilaufdiode (20) ist, die eine an den zu erwartenden Kurzschlussstrom angepasste Stromtragfähigkeit aufweist.

3. Vorrichtung (1) nach Anspruch 1,
**dadurch gekennzeichnet, dass**
das Schutzelement ein Thyristor ist.

4. Vorrichtung (1) nach einem der vorhergehenden Ansprüche,
**dadurch gekennzeichnet, dass**
die Halbleiterschutzmittel (9,14,20) Induktivitäten (14) umfassen, die in jedem Phasenmodul angeordnet sind.

5. Vorrichtung (1) nach Anspruch 4,
**dadurch gekennzeichnet, dass**
die Induktivitäten in einem oder mehreren Submodulen angeordnet sind.

6. Vorrichtung (1) nach einem der vorhergehenden Ansprüche,
**dadurch gekennzeichnet, dass**
die Halbleiterschutzmittel Induktivitäten umfassen, die wechselstromseitig der Phasenmodule angeordnet sind.

7. Vorrichtung (1) nach Anspruch 6,
**dadurch gekennzeichnet, dass**
die Induktivitäten Transformatorwicklungen mit einer zur Strombegrenzung ausreichenden Streuinduktivität sind.

8. Vorrichtung nach einem der vorhergehenden Ansprüche,
**dadurch gekennzeichnet, dass**
die Halbleiterschutzmittel Induktivitäten umfassen, die mit einem oder mit jedem Gleichspannungsanschluss (9) gleichspannungseitg verbunden sind.

9. Vorrichtung (1) nach einem der vorhergehenden Ansprüche,
**dadurch gekennzeichnet, dass**
jedes Submodul (15) eine erste Anschlussklemme (19), eine zweite Anschlussklemme (18), einen Energiespeicher (17) und einen zwei in Reihe geschaltete abschaltbare Leistungshalbleiter (12a,12b) aufweisenden Leistungshalbleiterzweig (16) in Parallelschaltung zum Energiespeicher (17) aufweist, wobei jedem abschaltbaren Leistungshalbleiter (12a,12b) eine gegensinnige Freilaufdiode (13a,13b) parallel geschaltet ist und der Verbindungspunkt des Emitters eines ersten abschaltbar Leistungshalbleiters (12a) des Leistungshalbleiterzweiges (16) und der Anode der dem ersten abschaltbaren Leistungshalbleiter (12a) zugeordneten gegensinnigen Freilaufdiode (13a) die erste Anschlussklemme (19) und der Verbindungspunkt der abschaltbaren Leistungshalbleiter (12a,12b) des Leistungshalbleiterzweiges (16) und der Freilaufdioden (13a,13b) die zweite Anschlussklemme (18) ausbilden.

10. Vorrichtung (1) nach einem der Ansprüche 1 bis 8,
**dadurch gekennzeichnet dass**
jedes Submodul (15) eine erste Anschlussklemme (18) eine zweite Anschlussklemme (19), einen Energiespeicher (17) und einen zwei in Reihe geschaltete abschaltbare Leistungshalbleiter (12a,12b) aufweisenden Leistungshalbleiterzweig (16) in Parallelschaltung zum Energie-Speicher (17) aufweist (17), wobei jedem abschaltbaren Leistungshalbleiter (12a,12b) eine gegensinnige Freilaufdiode (13a,13b) parallel geschaltet ist und der Verbindungspunkt des Kollektors eines ersten abschaltbaren Leistungshalbleiters (12a,12b) des Leistungshalbleiterzweiges und der Kathode der dem ersten abschaltbaren Leistungshalbleiter (12a) zugeordneten gegensinnigen Freilaufdiode (13a,13b) die erste Anschlussklemme (18) und Verbindungspunkt des ersten abschaltbaren Leistungshalbleiter (12a,12b) des Leistungshalbleiterzweiges (16) und der ihm angeordneten Freilaufdiode (13a,13b) die zweite Anschlussklemme (19) ausbilden.

11. Verfahren zum Schutz von Leistungshalbleitern einer Vorrichtung nach Anspruch 3, bei dem ein Kurzschluss gleichspannungsseitig des Phasenmoduls durch Messsensoren erfasst wird, nach dem Erfassen der Kurzschlussstromes die abschaltbaren Leistungshalbleitert (12a,12b) in ihre Trennstellung überführt werden und anschließend der Thyristor in seine Durchlassstellung überführt wird.

## Claims

1. Device (1) for converting an electric current, comprising at least one phase module (2a, 2b, 2c) having an AC voltage connection (3) and at least one DC voltage connection (p, n), wherein a phase module branch (11p, 11n) is formed between each DC voltage connection (p, n) and each AC voltage connection (3), and wherein each phase module branch (11p, 11n) is provided with a series circuit formed by submodules (15), each having at least one power semiconductor (12, 13), wherein each submodule (15) has one turn-off power semiconductor (12) with which there is connected in parallel a freewheeling diode (13) that is connected in the opposite sense,
**characterized by**
semiconductor protection means (9, 14, 20) connected in parallel and/or in series with at least one of the power semiconductors (12, 13), wherein the semiconductor protection means (9, 14, 20) comprise a protection element (20) connected in parallel with the freewheeling diode (13) that is connected in the opposite sense.

2. Device (1) as claimed in Claim 1,
**characterized in that**
the protection element is a freewheeling diode (20) having a current-carrying capacity adapted to the short-circuit current to be expected.

3. Device (1) as claimed in Claim 1,
**characterized in that**
the protection element is a thyristor.

4. Device (1) as claimed in any of the preceding claims,
**characterized in that**
the semiconductor protection means (9, 14, 20) comprise inductances (14) arranged in each phase module.

5. Device (1) as claimed in Claim 4,
**characterized in that**
the inductances are arranged in one or a plurality of submodules.

6. Device (1) as claimed in any of the preceding claims,
**characterized in that**
the semiconductor protection means comprise inductances arranged at the AC end of the phase modules.

7. Device (1) as claimed in Claim 6,
**characterized in that**
the inductances are transformer windings having a leakage inductance that suffices for current limiting.

8. Device as claimed in any of the preceding claims,
**characterized in that**
the semiconductor protection means comprise inductances connected to one or to each DC voltage connection (9) at the DC voltage end.

9. Device (1) as claimed in any of the preceding claims,
**characterized in that**
each submodule (15) has a first connection terminal (19), a second connection terminal (18), an energy store (17) and a power semiconductor branch (16) connected in parallel with the energy store (17), said power semiconductor branch having two series-connected turn-off power semiconductors (12a, 12b), wherein a freewheeling diode (13a, 13b) that is connected in the opposite sense is connected in parallel with each turn-off power semiconductor (12a, 12b) and the junction point of the emitter of a first turn-off power semiconductor (12a) of the power semiconductor branch (16) and the anode of the freewheeling diode (13a) that is connected in the opposite sense and is assigned to the first turn-off power semiconductor (12a) forms the first connection terminal (19) and the junction point of the turn-off power semiconductor (12a, 12b) of the power semiconductor branch (16) and the freewheeling diodes (13a, 13b) forms the second connection terminal (18).

10. Device (1) as claimed in any of Claims 1 to 8,
**characterized in that**
each submodule (15) has a first connection terminal (19), a second connection terminal (18), an energy store (17) and a power semiconductor branch (16) connected in parallel with the energy store (17), said power semiconductor branch having two series-connected turn-off power semiconductors (12a, 12b), wherein a freewheeling diode (13a, 13b) that is connected in the opposite sense is connected in parallel with each turn-off power semiconductor (12a, 12b) and the junction point of the collector of a first turn-off power semiconductor (12a, 12b) of the power semiconductor branch and the cathode of the freewheeling diode (13a, 13b) that is connected in the opposite sense and is assigned to the first turn-off power semiconductor (12a) forms the first connection terminal (19) and the junction point of the first turn-off power semiconductor (12a) of the power semiconductor branch (16) and the freewheeling diodes (13a, 13b) assigned thereto forms the second connection terminal (18).

11. Method for protecting power semiconductors of a device as claimed in Claim 3, wherein a short circuit is detected at the DC voltage end of the phase module by measurement sensors, and after the short-circuit current has been detected, the turn-off power semiconductors (12a, 12b) are transferred into their disconnected position and the thyristor is subsequently transferred into its on-state position.

## Revendications

1. Dispositif ( 1 ) de transformation d'un courant électrique par au moins un module ( 2a, 2b, 2c ) de phase, qui a une borne ( 3 ) de tension alternative et au moins une borne ( p, n ) de tension continue, dans lequel il est formé entre chaque borne (p, n ) de tension continue et chaque borne ( 3 ) de tension alternative une branche (11p, 11n) de module de phase, et dans lequel chaque branche ( 11p, 11n ) de module de phase dispose d'un circuit série composé de sous-modules ( 15 ), qui ont respectivement au moins un semiconducteur ( 12, 13 ) de puissance, dans lequel chaque sous-module ( 15 ) a un semiconducteur ( 12 ) de puissance, qui peut être bloqué et avec lequel est montée en parallèle une diode ( 13) de roue libre en sens inverse,
**caractérisé par**
des moyens ( 9, 14, 20 ) de protection d'un semiconducteur en circuit parallèle et/ou série avec au moins l'un des semiconducteurs ( 12, 13) de puissance, dans lequel les moyens (9, 14, 20) de protection du semiconducteur comprennent un élément ( 20 ) de protection, qui est monté en parallèle à la diode ( 13 ) de roue libre en sens inverse.

2. Dispositif ( 1 ) suivant la revendication 1,
**caractérisé en ce que**
l'élément de protection est une diode (20) de roue libre, qui a une aptitude à porter le courant, adaptée au courant de court-circuit auquel on s'attend.

3. Dispositif ( 1 ) suivant la revendication 1,
**caractérisé en ce que** l'élément de protection est un thyristor.

4. Dispositif ( 1 ) suivant l'une des revendications précédentes,
**caractérisé en ce que**
les moyens ( 9 14, 20 ) de protection d'un semiconducteur comprennent des inductances ( 14 ), qui sont montées dans chaque module de phase.

5. Dispositif ( 1 ) suivant la revendication 4,
**caractérisé en ce que**
les inductances sont montées dans un sous-module ou dans plusieurs sous-modules.

6. Dispositif ( 1 ) suivant l'une des revendications précédentes,
**caractérisé en ce que**
les moyens de protection d'un semiconducteur comprennent des inductances, qui sont montées du côté du courant alternatif du module de phase.

7. Dispositif ( 1 ) suivant la revendication 6,
**caractérisé en ce que**
les inductances sont des enroulements de transformateur ayant une inductance parasite suffisante pour la limitation du courant.

8. Dispositif suivant l'une des revendications précédentes,
**caractérisé en ce que**
les moyens de protection d'un semiconducteur comprennent des inductances, qui sont reliées du côté de la tension continue à une borne ( 9 ) de tension continue ou à chaque borne ( 9 ) de tension continue.

9. Dispositif ( 1 ) suivant l'une des revendications précédentes,
**caractérisé en ce que**
chaque sous-module (15) a une première borne (19) de connexion, une deuxième borne (18) de connexion, un accumulateur ( 7 ) d'énergie et une branche (16) de semiconducteur de puissance ayant deux semiconducteurs ( 12a, 12b ) de puissance montés en série et pouvant être bloqués en circuit parallèle avec l'accumulateur ( 17 ) d'énergie, une diode (13a, 13b) de roue libre en sens contraire étant montée en parallèle à chaque semiconducteur ( 12a, 12b ) de puissance pouvant être bloqué et le point de liaison de l'émetteur d'un premier semiconducteur (12a) de puissance pouvant être bloqué de la branche ( 16 ) de semiconducteur de puissance et de l'anode de la diode ( 13a ) de roue libre en sens contraire associée au premier semiconducteur ( 12a ) de puissance pouvant être bloqué forme la première borne ( 19 ) de connexion et le point de liaison du semiconducteur ( 12a, 12b ) de puissance pouvant être bloqué de la branche ( 16 ) de semiconducteur de puissance et des diodes ( 13a, 13b ) de roue libre forme la deuxième borne ( 18 ) de connexion.

10. Dispositif ( 1 ) suivant l'une des revendications 1 à 8,
**caractérisé en ce que**
chaque sous-module (15) a une première borne (18) de connexion, une deuxième borne (19) de connexion, un accumulateur (17) d'énergie et montée en parallèle à l'accumulateur (17) d'énergie une branche ( 16 ) de semiconducteur de puissance ayant deux semiconducteurs ( 12a, 12b ) de puissance montés en série et pouvant être bloqués, une diode ( 13a, 13b ) de roue libre en sens contraire étant montée en parallèle à chaque semiconducteur ( 12a, 12b ) de puissance pouvant être bloqué, et le point de liaison du collecteur d'un premier semiconducteur ( 12a, 12b ) de puissance pouvant être bloqué de la branche de semiconducteur de puissance et de la cathode de la diode ( 13a, 13b ) de roue libre en sens contraire associée au premier semiconducteur ( 12a) de puissance pouvant être bloqué forme la première borne ( 18 ) de connexion et le point de liaison du premier semiconducteur ( 12a, 12b ) de puissance pouvant être bloqué de la branche ( 16) de semiconducteur de puissance et de la diode (13a, 13db) qui lui est associée forme la deuxième borne ( 19 ) de connexion.

11. Procédé de protection de semiconducteur de puissance d'un dispositif suivant la revendication 3, dans lequel on détecte par des capteurs de mesure un court-circuit du côté de la tension continue du module de phase, après la détection du courant de court-circuit, on fait passer les semiconducteurs ( 12a, 12b ) de puissance pouvant être bloqués dans leur position de séparation et ensuite on met le thyristor à l'état passant.
